# EUROPÄISCHE PATENTSCHRIFT

(11) **EP 2 181 777 B1**
(45) Veröffentlichungstag und Bekanntmachung des Hinweises auf die Patenterteilung: **17.11.2010**
(21) Anmeldenummer: 09012156.7
(22) Anmeldetag: 24.09.2009
(51) Int. Cl.: B05D 1/06, B05D 1/10

(54) **Verfahren zum Pulverbeschichten von Werkstücken**
Method for powder coating workpieces
Procédé destiné au revêtement par poudre de pièces à usiner

(30) Priorität: 31.10.2008 DE 102008054147
(43) Veröffentlichungstag der Anmeldung: 05.05.2010
(73) Patentinhaber: Würfel, Christian, 90453 Nürnberg (DE)
(72) Erfinder: Würfel, Christian, 90453 Nürnberg (DE)
(74) Vertreter: Behr, Wolfgang

(56) Entgegenhaltungen:
- EP-A2- 0 676 464
- WO-A2-2008/084095
- DE-C1- 4 435 349
- DE-U1-202004 003 531
- US-A- 4 044 175
- US-B1- 6 190 429

## Beschreibung

Die vorliegende Erfindung betrifft ein Verfahren zum Pulverbeschichten von Werkstücken, bei welchem Beschichtungspulver auf das Werkstück aufgebracht und eingebrannt wird, wobei gegebenenfalls vor dem Schritt des Aufbringens des Beschichtungspulvers eine Vorbehandlung des Werkstückes stattfindet.

Vorteilhafterweise handelt es sich dabei um ein Verfahren zu elektrostatischen Pulverbeschichtung, bei welchem das Beschichtungspulver elektrisch aufgeladen wird und dann auf das Werkstück aufgesprüht wird, wo es aufgrund des Ladungsunterschiedes für eine gewisse Zeit haften bleibt. Die mit dem Beschichtungspulver beschichteten Werkstücke durchlaufen dann eine Einbrennanlage, in welcher das Beschichtungspulver thermisch zu einem glatten Film vernetzt.

Aus der US 4 044 175 ist ein solches Verfahren zum Pulverbeschichten von Werkstücken bekannt. Dabei sollen Beschichtungseulverreste, welche z.B. beim Einsatz mehrerer Farben entstehen, gesammelt und als Grundierungsschicht der Werkstücke eingesetzt werden.

Zum Beheizen der Einbrennanlage, welche üblicherweise bei Temperaturen zwischen 120°C und 260°C betrieben wird, werden große Mengen thermische Energie benötigt. Auch die Vorbehandlung des Werkstückes, bei welcher dieses zum Beispiel durch Waschvorgänge gesäubert und daraufhin wieder getrocknet werden muss, benötigt große Mengen an thermischer Energie. Diese thermische Energie wird bei bekannten Verfahren üblicherweise durch das Verbrennen fossiler Brennstoffe, insbesondere von Erdgas, erzeugt. Durch den hohen Energieeinsatz und die hohen Energiekosten sind bekannte Verfahren zum Pulverbeschichten entsprechend teuer.

Aufgabe der vorliegenden Erfindung ist es, ein Verfahren zum Pulverbeschichten von Werkstücken zur Verfügung zu stellen, welches eine kostengünstigere Produktion ermöglicht.

Erfindungsgemäß wird diese Aufgabe von einem Verfahren gemäß Anspruch 1 gelöst. Das erfindungsgemäße Verfahren zum Pulverbeschichten von Werkstücken umfaßt dabei die Schritte: Aufbringen von Beschichtungspulver auf das Werkstück und Einbrennen des Beschichtungspulvers, wobei ggf. vor dem Aufbringen des Beschichtungspulvers noch ein Schritt der Vorbehandlung des Werkstückes erfolgt. Erfindungsgemäß ist nun vorgesehen, Beschichtungspulverreste kalorisch zu verwerten, um thermische Energie zu erzeugen, welche bei der Durchführung des Verfahrens genutzt wird. Dabei kommen Beschichtungspulverreste zum Einsatz, welche z.B. dadurch entstehen, dass nicht das gesamte beim Beschichten auf die Werkstücke aufgesprühte Beschichtungspulver auf diesen haften bleibt. Ebenso fallen bei Farbwechseln und durch zu lange oder falsche Lagerung Beschichtungspulverreste an. Diese müssten bei bekannten Verfahren teuer extern entsorgt werden.

Durch die kalorische Verwertung solcher Beschichtungspulverreste können die Kosten des erfindungsgemäßen Verfahrens zum Pulverbeschichten erheblich gesenkt werden: Zum einen müssen Beschichtungspulverreste, welche beim Pulverbeschichten von Werkstücken anfallen, nicht mehr teuer extern entsorgt werden. Zweitens entsteht durch die kalorische Verwertung der Beschichtungspulverreste thermische Energie, welche bei der Durchführung des Verfahrens ohnehin benötigt wird und entsprechend genutzt werden kann. Hierdurch können die Kosten für fossile Brennstoffe, welche ohne die kalorische Verwertung der Beschichtungspulverreste eingesetzt werden müssten, eingespart werden.

Das erfindungsgemäße Verfahren macht sich die Tatsache zu Nutze, dass die für die Pulverbeschichtung verwendeten Beschichtungspulver zu einem Großteil aus hochkalorischen Bestandteilen bestehen, welche zur Erzeugung von thermischer Energie kalorisch verwertet werden können. Die kalorische Verwertung umfaßt dabei vorteilhafterweise einen Verbrennungsprozess, durch welchen ein Fluid wie z.B. Wasser oder Luft erwärmt wird, welches bei der Durchführung des erfindungsgemäßen Verfahrens dann zum Einsatz kommt.

Vorteilhafterweise wird dabei die bei der kalorischen Verwertung der Beschichtungspulverreste gewonnene thermische Energie bei der Vorbehandlung des Werkstücks und/oder beim Einbrennen des Beschichtungspulvers genutzt. Beide Vorgänge sind im Allgemeinen sehr energieintensiv, so dass hier durch die kalorische Verwertung der Beschichtungspulverreste hohe Kosteneinsparungen möglich sind.

Vorteilhafterweise wird die bei der kalorischen Verwertung der Beschichtungspulverreste gewonnene thermische Energie zur Erwärmung von Wasser verwendet, welches bei der Vorbehandlung des Werkstücks genutzt wird. Insbesondere zum Spülen der Werkstücke werden dabei große Mengen an Wasser benötigt, wobei das Wasser zuvor erwärmt werden muss. Hierzu kann nun erfindungsgemäß die bei der kalorischen Verwertung der Beschichtungspulverreste gewonnene thermische Energie genutzt werden. Ebenso kann die thermische Energie auch für die Trocknung der Werkstücke zum Einsatz kommen.

Alternativ oder zusätzlich kann die bei der kalorischen Verwertung der Beschichtungspulverreste gewonnene thermische Energie auch zur Beheizung der Einbrennanlage genutzt werden. In der Einbrennanlage wird das Beschichtungspulver erhitzt, um thermisch zu einem glatten Film zu vernetzen. Hierzu werden Temperaturen zwischen 120°C und 260°C benötigt, welche nun durch die Nutzung der thermischen Energie, welche bei der kalorischen Verwertung der Beschichtungspulverreste entsteht, bereitgestellt werden können.

Vorteilhafterweise wird bei dem erfindungsgemäßen Verfahren Beschichtungspulver, welches beim Aufbringen auf das Werkstück nicht an diesem Haften bleibt, gesammelt und zumindest teilweise kalorisch verwertet. Dieses Beschichtungspulver muss dabei ohnehin auch bei bekannten Verfahren zum Pulverbeschichten gesammelt werden, und kann üblicherweise höchstens zu einem gewissen Teil wiederverwertet werden. Bei häufigen Farbwechseln ist dabei eine Wiederverwertung üblicherweise überhaupt nicht vorgesehen. Das gesammelte Beschichtungspulver bildet damit, soweit es nicht wieder verwertet wird oder werden kann, Beschichtungspulverreste, welche nun erfindungsgemäß kalorisch verwertet werden. Hierdurch können zusätzlich zu den Einsparungen, welche sich durch die Erzeugung thermischer Energie ergeben, auch die Entsorgungskosten für die Beschichtungspulverreste eingespart werden.

Weiterhin vorteilhafterweise wird erfindungsgemäß Beschichtungspulver, welchem bei einem Farbwechsel aus der Anlage zum Aufbringen des Beschichtungspulvers entfernt werden muss, zumindest teilweise kalorisch verwertet. Auch dieses Beschichtungspulver muss bei bekannten Verfahren ohnehin entfernt werden und bildet Beschichtungspulverreste, welche durch die kalorische Verwertung nicht mehr entsorgt werden müssen.

Vorteilhafterweise stammt bei dem erfindungsgemäßen Verfahren zumindest ein Teil der Beschichtungspulverreste aus der selben Pulverbeschichtungsanlage, in welcher die Beschichtungspulverreste auch kalorisch verwertet werden. Vorteilhafterweise werden dabei in dieser Pulverbeschichtungsanlage sämtliche anfallenden Beschichtungspulverreste kalorisch verwertet. Hierdurch wird ein geschlossenes System zur Verfügung gestellt, bei welchem keine Beschichtungspulverreste mehr anfallen, die noch extern entsorgt werden müssten.

Weiterhin vorteilhafterweise stammt jedoch zumindest ein Teil der Beschichtungspulverreste aus einer anderen Pulverbeschichtungsanlage als jener, in der die Beschichtungspulverreste kalorisch verwertet werden. Hierdurch können in der Pulverbeschichtungsanlage, welche mit einer Anlage zur kalorischen Verwertung ausgestattet ist, auch Beschichtungspulverreste verwertet werden, die aus anderen Pulverbeschichtungsanlagen, welche eine solche Anlage nicht aufweisen, stammen. Hierdurch wird die Rentabilität der Pulverbeschichtungsanlage mit der Anlage zur kalorischen Verwertung der Beschichtungspulverrest nochmals gesteigert, da neben der Entsorgung eigener Beschichtungspulverreste auch die Entsorgung fremder Beschichtungspulverreste übernommen werden kann.

Die kalorische Verwertung der Beschichtungspulverreste erfolgt dabei erfindungsgemäß durch einen Verbrennungsprozess, durch welchen thermische Energie frei wird. Z.B. können die Beschichtungspulverreste dabei direkt in einem Brenner verbrannt werden, wofür sie vorteilhafterweise in den Brennerraum des Brenners eingeblasen werden. Es sind jedoch auch beliebige andere kalorische Verwertungsprozesse denkbar.

In einer besonders vorteilhafteren Variante des erfindungsgemäßen Verfahrens werden die Beschichtungspulverreste in einem Vergasungsreaktor vergast, wobei das entstehende Gas einem Brenner zugeleitet und dort zur Erzeugung thermischer Energie verbrannt wird. Das bei der Vergasung entstehende Gas kann so anstelle von Erdgas eingesetzt werden, um Brenner der Pulverbeschichtungsanlage zu betreiben. Insbesondere kann die Einbrennanlage über das entstehende Gas befeuert werden.

Eine solche Vergasung der Beschichtungspulverreste ist insbesondere aus regelungstechnischer Sicht von Vorteil. Zudem können bereits bestehende Verfeuerungsanlagen weiter genutzt werden. Weiterhin kann auf eine teure Rauchgasreinigung verzichtet werden, da durch die Vergasung und darauffolgende Verbrennung erheblich weniger Schadstoffe entstehen.

Die Vergasung erfolgt dabei bei Temperaturen zwischen 800 °C und 900 °C. Dabei wird ein Vergasungsmittel, vorteilhafterweise Luft, mit den Beschichtungspulverresten in Kontakt gebracht. Das entstehende Brenngas enthält als brennbare Bestandteile insbesondere Wasserstoff und Kohlemonoxid. Das Brenngas kann nun z.B. in einem Schwachgasbrenner verbrannt werden.

Vorteilhafterweise erfolgt die Vergasung dabei in einem Wirbelschichtverfahren. Dieses eignet sich in besonderer Weise für die Vergasung von Beschichtungspulverresten.

Weiterhin vorteilhafterweise wird das bei der Vergasung entstehende Gas in einem Gasspeicher zwischengespeichert. Hierdurch können die Vergasung und der Verbrennprozess regelungstechnisch getrennt werden.

Die vorliegende Erfindung umfaßt weiterhin eine Pulverbeschichtungsanlage zur Pulverbeschichtung von Werkstücken, welche gegebenenfalls eine Vorbehandlungsanlage zum Vorbehandeln von Werkstücken, eine Sprühanlage zum Aufbringen von Beschichtungspulver auf die Werkstücke und eine Einbrennanlage zum Einbrennen des Beschichtungspulvers aufweist. Die Pulverbeschichtungsanlage umfaßt dabei erfindungsgemäß eine Anlage zur kalorischen Verwertung von Beschichtungspulverresten, in welcher durch die kalorische Verwertung der Beschichtungspulverreste thermische Energie erzeugt wird, welche in der Pulverbeschichtungsanlage genutzt wird. Die erfindungsgemäße Pulverbeschichtungsanlage kann hierdurch erheblich kostengünstiger betrieben werden als bekannte Pulverbeschichtungsanlagen, da zum einen der Einsatz an sonstigen Brennstoffen reduziert oder komplett vermieden werden kann, und zum anderen die Entsorgungskosten für die Beschichtungspulverreste gespart werden.

Die erfindungsgemäße Pulverbeschichtungsanlage umfaßt dabei vorteilhafterweise eine Pulversammelvorrichtung zum Sammeln von beim Betrieb der Pulverbeschichtungsanlage anfallenden Beschichtungspulverresten und eine Pulverzuführvorrichtung zur Zuführung der gesammelten Beschichtungspulverreste zur Anlage zur kalorischen Verwertung. Hierdurch können die in der Pulverbeschichtungsanlage anfallenden Beschichtungspulverreste kalorisch verwertet werden, wobei die dabei entstehende thermische Energie in der Pulverbeschichtungsanlage genutzt wird. Das Sammeln und die Zuführung der Beschichtungspulverreste kann dabei sowohl von Hand, als auch automatisiert oder halb-automatisch erfolgen.

Weiterhin vorteilhafterweise umfaßt die Pulverbeschichtungsanlage eine Zugabevorrichtung, über welche der Anlage zur kalorischen Verwertung Beschichtungspulverreste aus anderen Pulverbeschichtungsanlagen zugeführt werden können. Hierdurch erhöht sich zum einen die Menge an Beschichtungspulverresten, welche kalorisch verwertet werden können, so dass mehr thermische Energie erzeugt werden kann. Weiterhin können hierdurch in der erfindungsgemäßen Pulverbeschichtungsanlage Beschichtungspulverreste, welche aus anderen Pulverbeschichtungsanlagen stammen, entsorgt werden.

Die erfindungsgemäße Pulverbeschichtungsanlage dient dabei weiterhin vorteilhafterweise zur Durchführung eines Verfahrens, wie es oben beschrieben wurde, wozu sie entsprechend gestaltet und mit entsprechenden Anlagen ausgestattet ist.

Insbesondere umfaßt die Pulverbeschichtungsanlage dabei einen Vergasungsreaktor zur Vergasung der Beschichtungspulverreste, Gasleitungen zum Transport des entstehenden Gases und einen Brenner zum Verbrennen des Gases. Vorteilhafterweise umfaßt die Pulverbeschichtungsanlage weiterhin einen Gasspeicher, welcher mit den Gasleitungen in Verbindung steht, so dass das Gas zwischengespeichert werden kann.

Die vorliegende Erfindung wird nun anhand eines Ausführungsbeispiels sowie einer Zeichnung näher dargestellt.

Dabei zeigt:

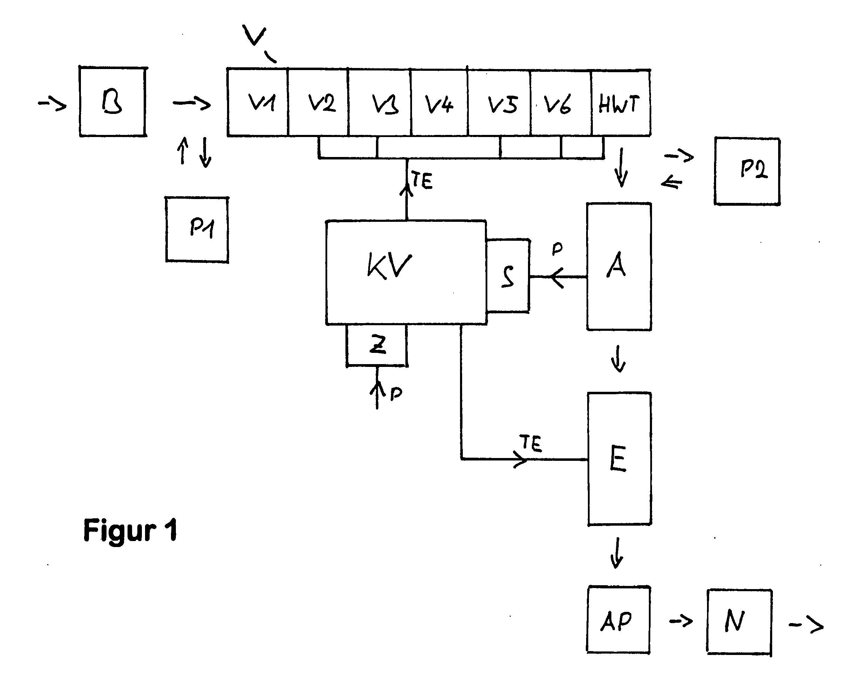

- Fig. 1: eine Prinzipdarstellung eines Ausführungsbeispiels einer erfindungsge- mäßen Pulverbeschichtungsanlage, bei welcher ein Ausführungsbeispiel eines erfindungsgemäßen Verfahrens zum Pulverbeschichten von Werkstücken zum Einsatz kommt.

Bei dem Ausführungsbeispiel des erfindungsgemäßen Verfahrens zum Pulverbeschichten von Werkstücken handelt es sich dabei um eine elektrostatische Pulverbeschichtung, bei welcher sich die elektrisch geladenen Teilchen des Beschichtungspulvers und das entgegengesetzt geladene bzw. geerdete Werkstück anziehen. Hierbei kommen Sprühpistolen zum Aufbringen des Beschichtungspulvers zum Einsatz, in welchen das Beschichtungspulver elektrisch aufgeladen wird. Das Werkstück ist dagegen geerdet, wodurch sich zwischen Werkstück und Pistole ein elektrisches Feld ergibt, durch welches die elektrisch geladenen Pulverpartikel zur Werkstückoberfläche gelangen.

Das Verfahren macht sich dabei zu Nutze, dass sich die elektrischen Ladungen an der Oberfläche der nicht leitenden Pulverpartikel sammeln. Die Beschichtungspulverpartikel haften so aufgrund des Ladungsunterschiedes bis zu einige Stunden auf dem geerdeten Werkstück. Die mit dem Beschichtungspulver beschichteten Werkstücke durchlaufen dann einen Einbrennofen, in welchem das Pulver thermisch zu einem glatten Film vernetzt. Diese Vernetzung erfolgt dabei abhängig vom Pulvermaterial bei Temperaturen zwischen 120°C und 260°C.

Die Pulverbeschichtung wird dabei für die Oberflächenbehandlung von Werkstücken aus Metall wie z.B. Aluminium, Eisen oder Stahl eingesetzt. Typische Werkstücke sind dabei z.B. Gehäuse für Maschinen, Behältnisse aller Art, Büromöbel, Geländer, Profilteile, Verkleidungen und Bauelemente. Die Pulverbeschichtung ermöglicht dabei korrosionsgeschützte Werkstücke mit einer kratzfesten, biegestabilen, schlagfesten, chemikalienbeständigen, wetterbeständigen und abriebfesten Oberflächenveredelung. Weiterhin ergibt sich durch die Verwendung von Farbpartikeln die Möglichkeit, die Werkstücke farblich zu gestalten.

Die bei der Pulverbeschichtung verwendeten Beschichtungspulver können dabei eine Vielzahl von unterschiedlichen Komponenten umfassen. Die wichtigste Komponente jedes Beschichtungspulver ist dabei das Bindemittel, welches alle grundlegenden Eigenschaften wie Oberflächenbeschaffenheit, Härte und Stabilität des nach dem Einbrennen entstehenden Lackfilmes bestimmt. Weiterhin umhüllt es die in den Lack eingebrachten Feststoffteilchen. Bindmittel bestehen dabei in der Regel aus langkettigen, meist organischen Verbindungen, welche aktive Gruppen mit der Fähigkeit zu vernetzen enthalten. Insbesondere kommen dabei Kunstharze zum Einsatz, die entweder miteinander oder über einen Härter zu verzweigten Makromolekülen vernetzen können. Zum Einsatz kommen dabei z.B. Epoxidharze, carboxyl- und hydroxylgruppenhaltige Polyester, OH- und GMA-Acrylatharze, sowie modifizierte Harze für spezielle Einsatzgebiete. Weiterhin können Thermoplaste zum Einsatz kommen, wie zum Beispiel Polyamid, Polyethylen, Polyvinylchlorid und Polyvinylidenchlorid. Die verwendeten Bindemittel sind dabei hochkalorisch, so dass bei der erfindungsgemäßen kalorischen Verwendung der Beschichtungspulverreste große Mengen an thermischer Energie erzeugt werden können.

Übliche Beschichtungspulver umfassen neben den Bindemitteln Additive wie z.B. Verlaufsmittel, Entgasungsmittel, Wachse und Strukturmittel. Weiterhin umfassen sie üblicherweise Pigmente oder Farbstoffe, um eine farbliche Gestaltung der Werkstücke zu ermöglichen.

Die Beschichtungspulver werden hergestellt, indem die Rohstoffe gemischt und in einem Extrusionsverfahren dispergiert werden. Dabei erfolgt auch ein Aufschmelzen der Harzteilchen, ohne dass bereits eine starke Vernetzung erfolgt. Bei der Extrusion wirken intensive Scherkräfte auf das Material, wodurch die Bestandteile intensiv homogenisiert werden. Das extrudierte Material wird dann in einem Mahlvorgang zu dem Beschichtungspulver vermahlen.

Das Ausführungsbeispiel der erfindungsgemäßen Pulverbeschichtungsanlage wird nun anhand von Fig. 1 näher dargestellt. Die Pulverbeschichtungsanlage dient dabei der Pulverbeschichtung von metallischen Werkstücken, insbesondere von großen Werkstücken aus dem Gebäudebereich wie z.B. Fassadenteilen. Die erfindungsgemäße Pulverbeschichtungsanlage umfaßt dabei eine oder mehrere Bestückungsstationen B, über welche die Anlage mit Werkstücken bestückt wird. Von den Bestückungsstationen B gelangen die Werkstücke, ggf. über einen ersten Puffer P1, zur Vorbehandlungsstrecke V. Dort werden die Werkstücke an den Vorbehandlungsstationen V1 bis V6 vorbehandelt und daraufhin in einem Haftwassertrockner HWT getrocknet. An der Vorbehandlungsstation V1 erfolgt dabei ein Beizen und Entfetten der Werkstücke, woraufhin diese an den Vorbehandlungsstation V2 und V3 gespült werden. Nach dem Chromatieren an der Vorbehandlungsstation V4 werden die Werkstücke nochmals in den Vorbehandlungsstationen V5 und V6 gespült. Das Spülen an den Stationen V2, V3 und V5 erfolgt dabei mit Leitungswasser, während das Spülen an der Vorbehandlungsstation V6 mit VE-Wasser erfolgt. Nach dem Spülen auf den Werkstücken anhaftendes Haftwasser wird dann im Haftwassertrockner HWT getrocknet.

Von dort gelangen die Werkstücke ggf. über ein oder mehrere zweite Puffer P2 zur Anlage zum Aufbringen des Beschichtungspulvers A, welche eine oder mehrere Pulverkabinen umfaßt. Dort wird Beschichtungspulver elektrostatisch auf die Werkstücke aufgebracht. Als Beschichtungspulver kommen dabei z.B. Expoxidpulverlacke, bei welchen eine Epoxidkomponente mit einem Härter vernetzt, Polyesterpulverlacke, welche als Bindemittel saures Polyester enthält, das mit einem Härter vernetzt, Hybridpulverlacke aus Epoxidharz und Polyesterharz, Polyurethanpulverlacke auf Basis von OH- Gruppen-haltiger Polyester, welche mit Isocycanat vernetzen, oder Acrylatpulverlacke zum Einsatz.

Von der Anlage zum Aufbringen des Beschichtungspulvers A gelangen die mit dem Beschichtungspulver beschichteten Werkstücke in die Einbrennanlage E, wo ein Aufschmelzen des Beschichtungspulvers mit einer entsprechenden Filmbildung auf dem Werkstück erfolgt. Von der Einbrennanlage E gelangen die Werkstücke dann über ein Abkühlpuffer AP zu einer oder mehreren Abnahmestationen N, wo die beschichteten Werkstücke entnommen werden können. Zum Transport der Werkstücke durch die Pulverbeschichtungsanlage ist dabei ein nicht gezeigtes Transportsystem vorgesehen.

Beim Aufbringen des Beschichtungspulvers auf das Werkstück in der Aufbringanlage A können dabei insbesondere zwei unterschiedliche Wege der elektrischen Aufladung des Beschichtungspulvers eingesetzt werden:
Bei der Corona-Applikation werden vermahlene Beschichtungspulverteilchen mit einer durchschnittlichen Korngröße von üblicherweise 30 bis 50 Mikrometer, von einem Luftstrom getragen, an einer Elektrode vorbeigeführt. An dieser Elektrode liegt eine Spannung von ca. 30 bis 100 kV an, welche die umgebende Luft ionisiert. Die Beschichtungspulverteilchen passieren dieses Feld, wobei Luftionen an die Partikeloberfläche angelagert werden. Durch die Aufnahme dieser Ladung folgt dass Pulverpartikel nicht mehr nur dem Luftstrom, sondern auch einem elektrischen Feld, das sich zwischen Elektrode und geerdetem Werkstück ausbildet.

Bei der Tribo-Aapplikation benötigt man dagegen keine Hochspannungseinheit, wobei im einfachsten Fall noch nicht einmal ein Steuergerät notwendig ist. Die Aufladung der Beschichtungspulverteilchen erfolgt dabei nicht über eine Fremdspannung, sondern durch Reibungsaufladung in einem Teflon-beschichteten Kunststoffrohr. Die dabei eingesetzten Sprühpistolen weisen hierzu üblicherweise eine längere Bauform bzw. aufgefächerte Sprühorgane auf. Hierdurch wird ein ausgiebiger Kontakt der Pulverteilchen mit der Rohrwandung und damit eine gute Aufladung garantiert.

Das Aufbringen des Beschichtungspulvers auf das Werkstück erfolgt dabei in speziellen Sprühkabinen, in welchen eine Luftströmung dafür sorgt, dass kein versprühtes Material diesen Raum verläßt und die Umgebung kontaminiert. Dabei ist die Strömungsgeschwindigkeit so zu wählen, dass das Pulver nicht vom Objekt weggezogen oder gar Fremdpartikel in die Kabine gerissen werden. Die Kabinen bestehen dabei aus verzinktem Stahl oder Edelstahl oder aus Glas bzw. Kunststoff. Kunststoffkabinen haben dabei die Eigenschaft, keinen Pulverlack anzunehmen, so dass die Kabine weniger stark verschmutzt und mehr Pulvermaterial zum Objekt gelangt, was den Erstauftragswirkungsgrad erhöht.

Da nicht das gesamte versprühte Beschichtungspulver am Werkstück haftet (overspray), muss dieses überschüssige Beschichtungspulver aufgefangen werden. Das Auffangen des überschüssigen Beschichtungspulvers kann dabei z.B. durch die Verwendung von Filtern erfolgen. Alternativ kann auch ein Zyklon eingesetzt werden, um die Kabinenabluft vom Pulver zu trennen. Dabei sollte jedoch weiterhin ein Feinstaubfilter nachgeschaltet werden, da die Trenngröße eines Zyklons üblicherweise nicht ausreicht, um die feinsten Pulverpartikel aus dem Luftstrom zu trennen. Dabei können auch mehrere Zyklone im Verbund (Multizyklon) eingesetzt werden.

Erfindungsgemäß wird nun zumindest ein Teil des so gesammelten Beschichtungspulvers kalorisch verwertet, wobei die dabei gewonnene thermische Energie bei der Durchführung des erfindungsgemäßen Verfahrens eingesetzt wird. Die erfindungsgemäße Pulverbeschichtungsanlage weist hierfür eine Pulversammelvorrichtung S auf, in welcher die beim Betrieb der Pulverbeschichtungsanlage anfallenden Beschichtungspulverreste gesammelt werden, sowie eine Pulverzuführvorrichtung, welche die Beschichtungspulverreste der Anlage zur kalorischen Verwertung KV zuführt. Das Sammeln und/oder das Zuführen der Beschichtungspulverreste kann dabei automatisiert oder teilweise automatisiert erfolgen. Die Pulversammelvorrichtung S dient dabei neben dem Sammeln des nicht auf den Werkstücken haftenbleibenden Beschichtungspulvers auch dem Sammeln von Beschichtungspulverresten, welche z.B. beim Wechseln des Farbtons oder sonstigen Produktionsänderungen anfallen. Insbesondere müssen bei solchen Produktionsänderungen sämtliche Schläuche entleert werden, wodurch sich ebenfalls große Beschichtungspulverreste ergeben können.

Erfindungsgemäß muss dabei nicht notwendig das gesamte nicht an den Werkstücken anhaftende Beschichtungspulver thermisch verwertet werden. Vielmehr kann auch ein Teil z.B. nach einer Schutzsiebung wieder in den Beschichtungspulvervorratsbehälter zurückgeführt werden, von welchen aus es erneut in den Sprühkreislauf gelangt. Allerdings muss dieses wiederverwertete Beschichtungspulver durch eine kontinuierliche Frischpulverzugabe unterstützt werden, da die Kornverteilung des Pulvers immer feiner wird. Zudem kann nicht das gesamte Pulver wiederverwertet werden, so dass sich immer Pulverreste ergeben. Weiterhin ist der Reinigungsaufwand bei der Wiederverwertung des Beschichtungspulvers gerade bei häufigen Farbwechseln oder geringen Stückzahlen oftmals so hoch, dass sich eine Wiederverwertung nicht lohnt und das gesamte nicht am Werkstück anhaftende Beschichtungspulver thermisch verwertet wird.

Weiterhin kann Beschichtungspulver durch zu lange oder unsachgemäße Lagerung in seinen Eigenschaften so verändert werden, dass es nicht mehr zur Beschichtung verwendet werden kann. Auch solche Beschichtungspulverreste können erfindungsgemäß kalorisch verwertet werden, um thermische Energie zur Verfügung zu stellen.

Weiterhin weist die erfindungsgemäße Pulverbeschichtungsanlage eine Zugabevorrichtung Z auf, über welche der Anlage zur kalorischen Verwertung KV auch Beschichtungspulverreste P aus anderen Pulverbeschichtungsanlagen zugeführt werden können. Hierdurch können in der erfindungsgemäßen Pulverbeschichtungsanlage auch Beschichtungspulverreste aus Pulverbeschichtungsanlangen, welche selbst keine Anlage zur kalorischen Verwertung aufweisen, eingesetzt werden. Die Zugabevorrichtung Z kann dabei je nach Ausführung der Anlage mit der Pulversammelvorrichtung S und/oder der Pulverzuführvorrichtung kombiniert oder separat zu einer oder beiden Anlagen ausgeführt seien.

In der erfindungsgemäßen Anlage zur kalorischen Verwertung KV der Beschichtungspulverreste erfolgt dabei erfindungsgemäß ein Verbrennprozess, durch welchen thermische Energie erzeugt wird, die dann in der Pulverbeschichtungsanlage genutzt werden kann. Insbesondere kann dabei ein Brenner vorgesehen sein, in welchen die Beschichtungspulverreste eingeblasen und wo diese direkt verbrannt werden. Andere Verfahren zur kalorischen Verwertung sind jedoch auch denkbar.

In einer besonders vorteilhafteren Ausführungsform werden die Beschichtungspulverreste dabei in einem Vergasungsreaktor vergast. Das entstehende Gas kann ggf. in einem Gasspeicher zwischengespeichert werden und steht zur kalorischen Verwertung in den übrigen Komponenten der Pulverbeschichtungsanlage zur Verfügung.

Die durch die Anlage zur kalorischen Verwertung KV der Beschichtungspulverreste bereitgestellte Leistung ist natürlich von der Dimensionierung der gesamten Pulverbeschichtungsanlage abhängig. Dabei sind Leistungen z.B. zwischen 10 KW und 1000 KW denkbar.

In der erfindungsgemäßen Pulverbeschichtungsanlage besteht insbesondere in der Einbrennanlage E ein großer Bedarf an thermischer Energie zur Beheizung der Brennkammern. Diese thermische Energie TE, welche im Stand der Technik mit Hilfe von konventionellen Brennern und unter Einsatz von Erdgas bereitgestellt wird, kann nun durch die erfindungsgemäße Anlage zur kalorischen Verwertung KV entweder teilweise oder auch komplett aus den Beschichtungspulverresten gewonnen und der Einbrennanlage E zur Verfügung gestellt werden. Weiterhin kann die durch die kalorische Verwertung der Beschichtungspulverreste gewonnene thermische Energie TE auch zur Erwärmung des in der Vorbehandlung V verwendeten Spülwassers sowie zum Betrieb des Haftwassertrockners HWT benutzt werden.

Insbesondere kann dabei das durch die Vergasung der Beschichtungspulverreste entstehende Gas in der Einbrennanlage und/oder der Vorbehandlung z.B. zur Erwärmung des Spülwassers oder zum Betrieb des Haftwassertrockner verbrannt werden. Dabei kann auf die dort bereits eingesetzten Brenner zurückgegriffen werden, welche nun an Stelle von Erdgas, welches erst teuer eingekauft werden müßte, mit dem bei der Verwertung der Beschichtungspulverreste entstehenden Gas befeuert werden.

Durch die energetische Verwertung des aus hochkalorischen Bestandteilen zusammengesetzten Beschichtungspulvers durch die in die Beschichtungsanlage integrierte Anlage zur kalorischen Verwertung KV, über welche wärmeintensive Prozesse wie z.B. die Beheizung der Brennkammern der Pulverbeschichtungsanlage oder die Vorbehandlung der Werkstücke erfolgen, können einerseits fossile Energieträger im Produktionsprozess eingespart werden, und andererseits die Betriebs- und Produktionskosten durch die entfallenden Entsorgungskosten gesenkt werden.

## Patentansprüche

1. Verfahren zum Pulverbeschichten von Werkstücken, mit den Schritten:
- gegebenenfalls Vorbehandlung des Werkstückes,
- Aufbringen von Beschichtungspulver auf das Werkstück und
- Einbrennen des Beschichtungspulvers,
**dadurch gekennzeichnet,**
**dass** Beschichtungspulverreste kalorisch verwertet werden, um thermische Energie zu erzeugen, welche bei der Durchführung des Verfahrens genutzt wird.

2. Verfahren nach Anspruch 1, wobei die bei der kalorischen Verwertung der Beschichtungspulverreste gewonnene thermische Energie bei der Vorbehandlung des Werkstücks und/oder beim Einbrennen des Beschichtungspulvers genutzt wird.

3. Verfahren nach Anspruch 2, wobei die bei der kalorischen Verwertung der Beschichtungspulverreste gewonnene thermische Energie zur Erwärmung von Wasser verwendet wird, welches bei der Vorbehandlung des Werkstücks genutzt wird.

4. Verfahren nach Anspruch 2, wobei die bei der kalorischen Verwertung der Beschichtungspulverreste gewonnene thermische Energie zur Beheizung der Einbrennanlage genutzt wird, in welcher das Beschichtungspulver eingebrannt wird.

5. Verfahren nach einem der vorangegangenen Ansprüche, wobei Beschichtungspulver, welches beim Aufbringen auf das Werkstück nicht an diesem Haften bleibt, gesammelt und zumindest teilweise kalorisch verwertet wird.

6. Verfahren nach einem der vorangegangenen Ansprüche, wobei Beschichtungspulver, welches bei einem Farbwechsel aus der Anlage zum Aufbringen des Beschichtungspulvers entfernt werden muss, zumindest teilweise kalorisch verwertet wird.

7. Verfahren nach einem der vorangegangenen Ansprüche, wobei zumindest ein Teil der Beschichtungspulverreste aus der selben Pulverbeschichtungsanlage stammt, in welcher die Beschichtungspulverreste kalorisch verwertet werden.

8. Verfahren nach einem der vorangegangenen Ansprüche, wobei zumindest ein Teil der Beschichtungspulverreste aus einer anderen Pulverbeschichtungsanlage stammt als der, in welcher die Beschichtungspulverreste kalorisch verwertet werden.

9. Verfahren nach einem der vorangegangenen Ansprüche, wobei die Beschichtungspulverreste in einem Vergasungsreaktor vergast werden, wobei das entstehende Gas einem Brenner zugeleitet und dort zur Erzeugung thermischer Energie verbrannt wird.

10. Verfahren nach Anspruch 9, wobei die Vergasung in einem Wirbelschichtverfahren erfolgt.

11. Verfahren nach Anspruch 9 oder 10, wobei das bei der Vergasung entstehende Gas in einem Gasspeicher zwischengespeichert wird.

12. Pulverbeschichtungsanlage zur Pulverbeschichtung von Werkstücken mit gegebenenfalls einer Vorbehandlungsanlage zum Vorbehandeln der Werkstücke, einer Sprühanlage zum Aufbringen von Beschichtungspulver auf die Werkstücke und einer Einbrennanlage zum Einbrennen des Beschichtungspulvers,
**gekennzeichnet durch**
eine Anlage zur kalorischen Verwertung von Beschichtungspulverresten, in welcher **durch** die kalorische Verwertung der Beschichtungspulverreste thermische Energie erzeugt wird, welche in der Pulverbeschichtungsanlage genutzt wird.

13. Pulverbeschichtungsanlage nach Anspruch 12 mit einer Pulversammelvorrichtung zum Sammeln von beim Betrieb der Pulverbeschichtungsanlage anfallenden Beschichtungspulverresten und einer Pulverzuführvorrichtung zur Zuführung der gesammelten Beschichtungspulverreste zur Anlage zur kalorischen Verwertung.

14. Pulverbeschichtungsanlage nach Anspruch 12 oder 13 mit einer Zugabevorrichtung, über welche der Anlage zur kalorischen Verwertung Beschichtungspulverreste aus anderen Pulverbeschichtungsanlagen zugeführt werden können.

15. Pulverbeschichtungsanlage nach einem der vorangegangenen Ansprüche zur Durchführung eines Verfahrens nach einem der Ansprüche 1 bis 11.

## Claims

1. Method for powder coating workpieces, comprising the steps:
- optionally pretreating the workpiece;
- applying coating powder to the workpiece; and
- baking the coating powder,
**characterised in that**
coating powder residues are utilised calorifically to generate thermal energy which is used in the carrying out of the method.

2. A method in accordance with claim 1, wherein the thermal energy acquired in the calorific utilisation of the coating powder residues is used in the pretreatment of the workpiece and/or in the baking of the coating powder.

3. A method in accordance with claim 2, wherein the thermal energy acquired in the calorific utilisation of the coating powder residues is used for heating water which is utilised in the pretreatment of the workpiece.

4. A method in accordance with claim 2, wherein the thermal energy acquired in the calorific utilisation of the coating powder residues is used for heating the baking plant in which the coating powder is baked.

5. A method in accordance with one of the preceding claims, wherein coating powder which does not remain stuck to the workpiece on the application thereon is collected and is at least partly utilised calorifically.

6. A method in accordance with one of the preceding claims, wherein coating powder which has to be removed from the plant on a change of colour for applying the coating powder is at least partially utilised calorifically.

7. A method in accordance with one of the preceding claims, wherein at least some of the coating powder residues originates from the same powder coating plant in which the coating powder residues are utilised calorifically.

8. A method in accordance with one of the preceding claims, wherein at least some of the coating powder residues originates from a different powder coating plant than the one in which the coating powder residues are utilised calorifically.

9. A method in accordance with one of the preceding claims, wherein the coating powder residues are gasified in a gasification reactor, wherein the gas arising is fed to a burner and is burnt there for producing thermal energy.

10. A method in accordance with claim 9, wherein the gasification takes place in a fluidised bed method.

11. A method in accordance with claim 9, wherein the gas arising in the gasification is temporarily stored in a gas store.

12. A powder coating plant for powder coating workpieces optionally having a pretreatment plant for pretreating the workpieces, a spray plant for applying coating powder onto the workpieces and a baking plant for baking the coating powder,
**characterised by**
a plant for calorific utilisation of coating powder residues in which thermal energy which is utilised in the powder coating plant is generated by the calorific utilisation of the coating powder residues.

13. A powder coating plant in accordance with claim 12 comprising a powder collection apparatus for collecting coating powder residues arising in the operation of the powder coating plant and a powder supply apparatus for supplying the collected coating powder residues to the plant for calorific utilisation.

14. A powder coating plant in accordance with claim 12 or claim 13 comprising a dispensing apparatus via which coating powder residues from other powder coating plants can be supplied to the plant for calorific utilisation.

15. A powder coating plant in accordance with one of the preceding claims for carrying out a method in accordance with one of the claims 1 to 11.

## Revendications

1. Procédé destiné aux revêtements par poudre de pièces à usiner, avec les étapes :
- de traitement préliminaire de la pièce à usiner, le cas échéant,
- d'application de poudre de revêtement sur la pièce à usiner et
- de cuisson de la poudre de revêtement,
**caractérisé en ce que**
des restes de poudre de revêtement sont exploités calorifiquement afin de générer de l'énergie thermique qui est utilisée lors de l'exécution du procédé.

2. Procédé selon la revendication 1, l'énergie thermique obtenue lors de l'exploitation calorifique des restes de poudre de revêtement étant utilisée lors du traitement préliminaire de la pièce à usiner et/ou lors de la cuisson de la poudre de revêtement.

3. Procédé selon la revendication 2, l'énergie thermique obtenue lors de l'exploitation calorifique des restes de poudre de revêtement étant employée pour le réchauffage de l'eau qui est utilisée lors du traitement préliminaire de la pièce à usiner.

4. Procédé selon la revendication 2, l'énergie thermique obtenue lors de l'exploitation calorifique des restes de poudre de revêtement étant utilisée pour le chauffage de l'installation de cuisson dans laquelle la poudre de revêtement est cuite.

5. Procédé selon une quelconque des revendications précédentes, la poudre de revêtement qui ne reste pas collée sur la pièce à usiner lors de l'application sur celle-ci étant collectée et exploitée calorifiquement au moins en partie.

6. Procédé selon une quelconque des revendications précédentes, la poudre de revêtement qui doit être retirée de l'installation en cas de changement de couleur pour l'application de la poudre de revêtement étant exploitée calorifiquement au moins en partie.

7. Procédé selon une quelconque des revendications précédentes, au moins une partie des restes de poudre de revêtement provenant de la même installation de revêtement par poudre que celle dans laquelle sont exploités calorifiquement sont les restes de poudre de revêtement.

8. Procédé selon une quelconque des revendications précédentes, au moins une partie des restes de poudre de revêtement provenant d'une autre installation de revêtement par poudre que celle dans laquelle sont exploités calorifiquement les restes de poudre de revêtement.

9. Procédé selon une quelconque des revendications précédentes, les restes de poudre de revêtement étant gazéifiés dans un réacteur de gazéification, le gaz produit étant amené dans un brûleur et y étant brûlé pour générer de l'énergie thermique.

10. Procédé selon la revendication 9, la gazéification s'effectuant dans un procédé à lit fluidisé.

11. Procédé selon la revendication 9 ou 10, le gaz produit lors de la gazéification étant stocké provisoirement dans un accumulateur de gaz.

12. Installation de revêtement par poudre destinée au revêtement par poudre de pièces à usiner avec le cas échéant une installation de traitement préliminaire destinée au traitement préliminaire des pièces à usiner, une installation de vaporisation destinée à l'application de la poudre de revêtement sur les pièces à usiner et une installation de cuisson destinée à la cuisson de la poudre de revêtement,
**caractérisée par**
une installation destinée à l'exploitation calorifique des restes de poudre de revêtement, dans laquelle est générée par l'exploitation calorifique des restes de poudre de revêtement de l'énergie thermique qui est utilisée dans l'installation de revêtement par poudre.

13. Installation de revêtement par poudre selon la revendication 12 avec un dispositif de collecte de la poudre destiné à collecter les restes de poudre de revêtement survenus pendant le service de l'installation de revêtement par poudre et un dispositif d'amenage de la poudre destiné à l'amenage des restes de poudre de revêtement collectés vers l'installation en vue de l'exploitation calorifique.

14. Installation de revêtement par poudre selon la revendication 12 ou 13 avec une installation d'addition par l'intermédiaire de laquelle il est possible d'amener dans l'installation des restes de poudre de revêtement issus d'autres installations de revêtement par poudre en vue de l'exploitation calorifique.

15. Installation de revêtement par poudre selon une quelconque des revendications précédentes destinée à l'exécution d'un procédé selon l'une des revendications 1 à 11.
